(19) Europäisches Patentamt
European Patent Office
Office européen des brevets

(11) **EP 2 611 156 A1**

(12) **EUROPEAN PATENT APPLICATION**

(43) Date of publication:
**03.07.2013 Bulletin 2013/27**

(51) Int Cl.:
**H04N 7/26** *(2006.01)*    **H04N 7/32** *(2006.01)*

(21) Application number: **12196944.8**

(22) Date of filing: **13.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.12.2011  US 201161581705 P**
**18.05.2012  KR 20120053223**

(72) Inventors:
• **Wey, Ho Cheon**
**443-742 Gyeonggi-do (KR)**
• **Lee, Jae Joon**
**443-742 Gyeonggi-do (KR)**
• **Lee, Cheon**
**500-712 Gwangju (KR)**
• **Ho, Yo Sung**
**500-712 Gwangju (KR)**

(71) Applicants:
• **Samsung Electronics Co., Ltd**
**Gyeonggi-do 443-742 (KR)**
• **Gwangju Institute of Science and Technology**
**Buk-gu 500**
**712 Gwangju (KR)**

(74) Representative: **Land, Addick Adrianus Gosling et al**
**Arnold & Siedsma**
**Sweelinckplein 1**
**2517 GK Den Haag (NL)**

(54) **Apparatus and method for encoding depth image by skipping discrete cosine transform (dct), and apparatus and method for decoding depth image by skipping dct**

(57)    An apparatus and method for encoding an image by skipping discrete cosine transform (DCT), and an apparatus and method for decoding an image by skipping the DCT. An image encoding apparatus may classify residual data into groups, and may encode the residual data using a representative value of each of the groups and group identification information that is used to identify the groups.

FIG. 9

EP 2 611 156 A1

**Description**

This application claims the priority benefit of U.S. Provisional Application No. 61/581,705, filed on December 30, 2011, in the United States Patent and Trademark Office, and Korean Patent Application No. 10-2012-0053223, filed on May 18, 2012, in the Korean Intellectual Property Office.

Example embodiments of the following disclosure relate to an apparatus and method for encoding and decoding an image, and more particularly, to an apparatus and method for encoding and decoding an image without performing a discrete cosine transform (DCT).

A depth image may represent, in the form of a color image, information relating to a distance between a camera and an object in the real world that is captured in an image. The depth image may be used as auxiliary data to combine color images in a virtual view in various three-dimensional (3D) video application fields.

Image compression methods are generally based on a discrete cosine transform (DCT) and quantization of image data that is used to encode a depth image. However, in these image compression methods, the quality of a synthetic image is reduced due to a loss of a high-frequency component of a boundary line. Additionally, when the quantization is performed after the DCT is performed based on a distribution of elements included in residual data, the size of the encoded information may be larger as compared to when directly quantizing the residual data.

The foregoing and/or other aspects are achieved by providing an image encoding apparatus, including a residual data classifying unit to classify residual data into a plurality of groups, the residual data being a difference between an original image and a predicted image, a representative value determining unit to determine a representative value of each of the plurality of groups, the representative value being representative of values of the residual data that are included in the plurality of groups, a group identification information determining unit to determine group identification information, the group identification information being used to identify the plurality of groups, and an encoding unit to encode the representative value, and the group identification information.

The group identification information may include information that represents values of elements included in the residual data, in the form of a map to identify a group corresponding to each of the elements.

The encoding unit may quantize the representative value, and may encode the quantized representative value and the group identification information.

The foregoing and/or other aspects are achieved by providing a n image encoding apparatus, including a first encoding cost determining unit to determine a cost of a first encoding process in which a discrete cosine transform (DCT) is performed, a second encoding cost determining unit to determine a cost of a second encoding process in which the DCT is skipped, an encoding process selecting unit to compare the cost of the first encoding process with the cost of the second encoding process, and to select either the first encoding process or the second encoding process, when the first encoding process is selected, an first encoder to encode an original image using the first encoding process, and when the second encoding process is selected, an second encoder to encode an original image using the second encoding process.

The encoding process selecting unit may transmit, to an image decoding apparatus, encoding identification information indicating an encoding process selected between the first encoding process and the second encoding process.

The foregoing and/or other aspects are achieved by providing an image decoding apparatus, including a representative value decoding unit to decode a representative value of each of a plurality of groups, into which residual data is classified, from encoding information encoded by skipping a discrete cosine transform (DCT); a group identification information decoding unit to decode group identification information from the encoding information, the group identification information being used to identify the plurality of groups; a residual data determining unit to determine residual data, using the decoded representative value and the decoded group identification information, the residual data being a difference between an original image and a predicted image, and an image generator to generate an original image, using the predicted image and the determined residual data.

The residual data determining unit may transform identification information corresponding to each of the plurality of groups among the group identification information to the decoded representative value of each of the plurality of groups, and may determine the residual data.

The representative value decoding unit may decode, using entropy decoding, information obtained by encoding the representative value among the encoding information, may inverse-quantize the decoded information, and may restore the representative value.

The foregoing and/or other aspects are achieved by providing an image encoding method, including classifying residual data into a plurality of groups, the residual data being a difference between an original image and a predicted image, determining a representative value of each of the plurality of groups, the representative value being representative of values of the residual data that are included in the plurality of groups, determining group identification information, the group identification information being used to identify the plurality of groups, and encoding the representative value, and the group identification information.

The foregoing and/or other aspects are achieved by providing an image encoding method, including determining a cost of a first encoding process in which a DCT is performed, determining a cost of a second encoding process in which the DCT is skipped, comparing the cost of the first encoding process with the cost of the second encoding process, and selecting either the first encoding process or the second encoding process, and encoding an original image using a selected encoding process.

The foregoing and/or other aspects are achieved by providing an image decoding method, including decoding a representative value of each of a plurality of groups, into which residual data is classified, from encoding information encoded by skipping a discrete cosine transform (DCT); decoding group identification information from the encoding information, the group identification information being used to identify the plurality of groups; determining residual data, using the decoded representative value and the decoded group identification information, the residual data being a difference between an original image and a predicted image; and generating an original image, using the predicted image and the determined residual data.

The foregoing and/or other aspects are achieved by providing a system for processing an image, including an image prediction unit to determine residual data by calculating a difference between a predicted image and an original image; an encoding process selecting unit to receive the residual data, compare a first encoding cost with a second encoding cost, and control a first switch that selects one of a first encoder and a second encoder, based on the comparing; and a second switch to select one of a first decoder and a second decoder, based on the selected first encoder or second encoder.

Additional aspects, features, and/or advantages of example embodiments will be set forth in part in the description which follows and, in part, will be apparent from the description, or may be learned by practice of the disclosure.

BRIEF DESCRIPTION OF THE DRAWINGS

These and/or other aspects and advantages will become apparent and more readily appreciated from the following description of the example embodiments, taken in conjunction with the accompanying drawings of which:

FIG. 1 illustrates a block diagram of a structure of an image encoding apparatus, according to example embodiments;
FIG. 2 illustrates a block diagram of a structure of a second encoder in the image encoding apparatus of FIG. 1;
FIG. 3 illustrates a block diagram of a structure of an encoding cost determining unit in the image encoding apparatus of FIG. 1;
FIG. 4 illustrates a diagram of an example of an image encoding apparatus, according to example embodiments;
FIG. 5 illustrates a diagram of an operation of a second encoder in the image encoding apparatus of FIG. 4;
FIG. 6 illustrates a diagram of an example of generating a representative value and group identification information, according to example embodiments;
FIG. 7 illustrates a block diagram of an image decoding apparatus, according to example embodiments;
FIG. 8 illustrates a block diagram of a structure of a second decoder in the image decoding apparatus of FIG. 7;
FIG. 9 illustrates a flowchart of an image encoding method, according to example embodiments; and
FIG. 10 illustrates a flowchart of an image decoding method, according to example embodiments.

DETAILED DESCRIPTION

Reference will now be made in detail to example embodiments, examples of which are illustrated in the accompanying drawings, wherein like reference numerals refer to the like elements throughout. Example embodiments are described below to explain the present disclosure by referring to the figures.

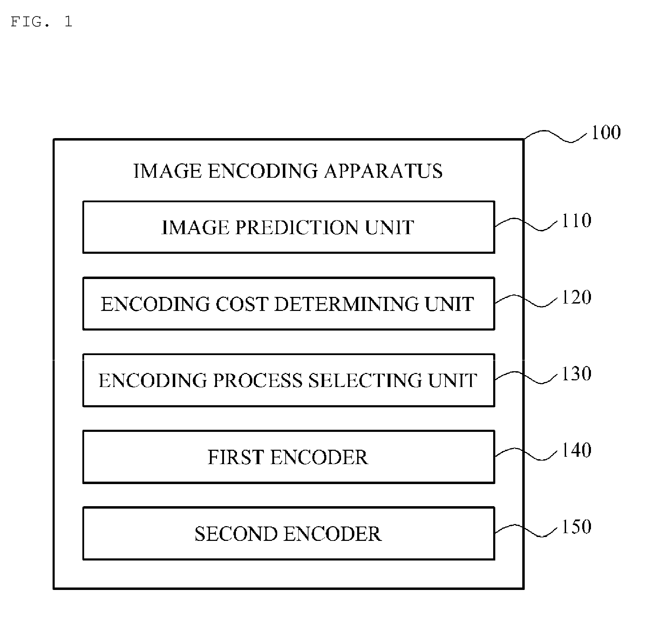

FIG. 1 illustrates a block diagram of a structure of an image encoding apparatus 100, according to example embodiments.

The image encoding apparatus 100 may identify a block from an image, upon which discrete cosine transform (DCT) on residual data is to be performed, and may encode an original image using either a first encoding process or a second encoding process, based on a result of the identifying. In the first encoding process, the DCT may be performed, and in the second encoding process, the DCT may be skipped.

Referring to FIG. 1, the image encoding apparatus 100 may include an image prediction unit 110, an encoding cost determining unit 120, an encoding process selecting unit 130, a first encoder 140, and a second encoder 150.

The image prediction unit 110 may predict a value of a next frame of the original image, and may determine residual data. Specifically, the image prediction unit 110 may predict the value of the next frame of the original image using at least one prediction mode, and then may generate a predicted image using the predicted values of the next frame. Additionally, the image prediction unit 110 may compare the predicted image with the original image, and may determine residual data, which is a difference between the predicted image and the original image. In this instance, for example, the prediction mode may correspond to macroblocks of various sizes, and may include at least one of an intra prediction mode and an inter prediction mode for each macroblock, however, the present disclosure is not limited thereto.

In addition, the image prediction unit 110 may select an optimum prediction mode to be used to generate a predicted image, from among various prediction modes, and may generate a predicted image using the selected optimum prediction mode.

The encoding cost determining unit 120 may determine a first encoding cost and a second encoding cost, using a bitrate-distortion optimization process. The first encoding cost may occur when the original image is encoded by the first encoding process, and the second encoding cost may occur when the original image is encoded by the second encoding process.

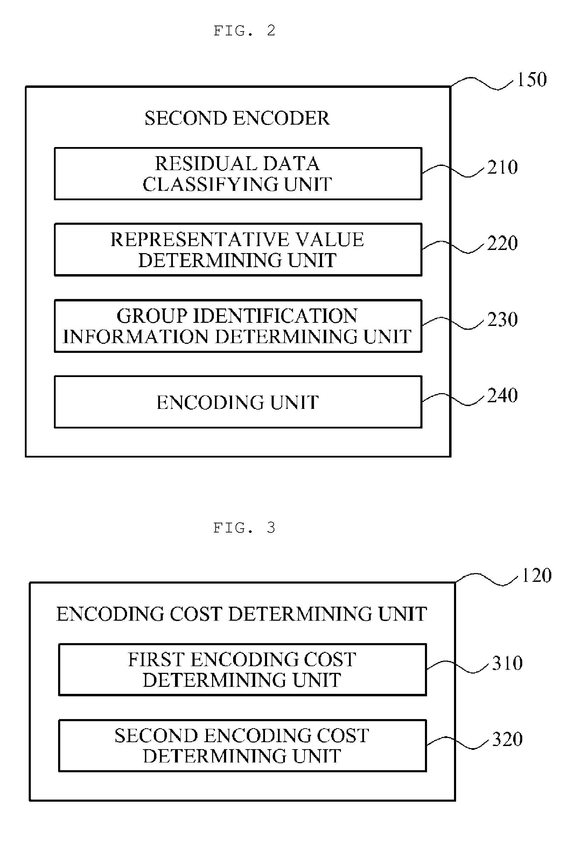

An example in which the encoding cost determining unit 120 determines the first encoding cost and the second encoding cost will be further described with reference to FIG. 3.

The encoding process selecting unit 130 may compare the determined first encoding cost with the determined second encoding cost, and may select either the first encoding process or the second encoding process, based on a result of the comparing. Specifically, the encoding process selecting unit 130 may select an encoding process, among the first encoding process and the second encoding process, which corresponds to a lower cost between the first encoding cost and the second encoding cost. For example, when the first encoding cost is less than the second encoding cost, the encoding process selecting unit 130 may select the first encoding process, and vice versa.

In this instance, when the first encoding process is selected, the encoding process selecting unit 130 may transmit the residual data to the first encoder 140. When the second encoding process is selected, the encoding process selecting unit 130 may transmit the residual data to the second encoder 150.

Additionally, when the optimum prediction mode selected by the image prediction unit 110 does not correspond to a '4 x 4' block, the encoding process selecting unit 130 may select the first encoding process and may transmit the residual data to the first encoder 140, by skipping an operation performed by the encoding cost determining unit 120.

In this instance, when the '4 x 4' block is encoded, an encoding gain may be obtained using the second encoding process, since the '4 x 4' block includes a quantization coefficient. However, since other blocks in which a quantization coefficient does not exist, are simple compared to the '4 x 4' block, it may be difficult to obtain an encoding gain using the second encoding process.

Accordingly, the encoding process selecting unit 130 may determine whether the optimum prediction mode selected by the image prediction unit 110 corresponds to the '4 x 4' block. When the optimum prediction mode does not correspond to the '4 x 4' block, the residual data may be transmitted to the first encoder 140 directly, without operating the encoding cost determining unit 120. Thus, it is possible to improve an encoding process selection speed.

Additionally, the encoding process selecting unit 130 may generate encoding identification information used to identify the encoding process that is selected from among the first encoding process and the second encoding process. Further, the encoding process selecting unit 130 may transmit the encoding identification information to an image decoding apparatus for each macroblock before the first encoder 140 or the second encoder 150 encodes the residual data.

For example, the encoding process selecting unit 130 may define the encoding identification information to be 'NoDCT_flag', which is binary information including '0' and '1'. In this instance, when the first encoding process is selected, the encoding process selecting unit 130 may determine 'NoDCT_flag' to be '0.' When the second encoding process is selected, the encoding process selecting unit 130 may determine 'NoDCT_flag' to be '1.'

The first encoder 140 may encode the residual data using the first encoding process in which the DCT is performed on the residual data.

Specifically, the first encoder 140 may perform the DCT on the residual data, and may transform the residual data to frequency domain information. The first encoder 140 may perform the DCT on residual data with high repetitiveness in space, and may represent the residual data using a plurality of coefficients of a frequency domain.

Subsequently, the first encoder 140 may encode the transformed residual data. Specifically, the first encoder 140 may encode, using quantization and entropy encoding, the residual data transformed to the coefficients by the DCT.

The second encoder 150 may encode the residual data, using the second encoding process in which the DCT is skipped.

Specifically, the second encoder 150 may classify the residual data into a plurality of groups, and may determine a representative value of each of the groups. Additionally, the second encoder 150 may generate group identification information used to identify the groups.

In this instance, the representative value may be representative of corresponding values based on values of information that are included in the groups. For example, the second encoder 150 may determine, as a representative value, a mean value of the information, however, the present disclosure is not limited thereto.

Additionally, the group identification information may be information that represents values of elements included in the residual data, in the form of a map, for example, to identify a group corresponding to each of the elements. In this instance, for example, the group identification information may enable the groups to be identified using a binary numeral or an integer. For example, the second encoder 150 may determine the group identification information in the form of a binary map corresponding to the residual data. In this instance, the binary map may include '0' and '1', such that '0' may be a value indicating a first group among the groups obtained by the residual data classifying unit 210, and '1' may be a value indicating a second group among the groups. Additionally, '0' may be matched to a representative value of the first group, and '1' may be matched to a representative value of the second group.

The second encoder 150 may encode a representative value of each of the groups, and the group identification information, and accordingly may encode the residual data using a smaller number of bits, compared to the first encoding process, due to the skipping of the DCT.

For example, when residual data includes ten elements '0' and six elements '7', the first encoder 140 may need to encode the elements '0' and '7' based on an arrangement order of the elements '0' and '7'. In this instance, since a single bit is required to represent the elements '0' and three bits are required to represent the elements '7', the encoded residual data may be 53 bits.

Conversely, the second encoder 150 may classify the elements '0' and '7' into a first group and a second group, respectively, and may generate group identification information including an arrangement order of the first group and the second group. The group identification information may indicate which one of the first group and the second group includes elements of the residual data. For example, a group to which each of the elements belongs may be represented by selecting either 'yes' or 'no'. Accordingly, a bit size of the group identification information may be 16 bits, namely, a number of the elements.

Additionally, since the first group includes the elements '0' and the second includes the elements '7', a representative value of the first group and a representative value of the second group may be '0' and '7', respectively. In other words, a size of the representative value of the first group, and a size of the representative value of the second group may be 1 bit and 3 bits, respectively.

Accordingly, the second encoder 150 may encode the group identification information corresponding to 16 bits, the representative value of the first group corresponding to 1 bit, and the representative value of the second group corresponding to 3 bits. In other words, the second encoder 150 may encode information corresponding to 20 bits.

As described above, the second encoder 150 may classify residual data into groups, and may encode the residual data, using a representative value of each of the groups and using group identification information to identify the groups, and accordingly a size of a bit to be encoded may be reduced.

Additionally, the image encoding apparatus 100 may identify, from an image, a block that needs to perform DCT on the residual data, and may encode the original image using either the first encoding process or the second encoding process, based on a result of the identifying. Accordingly, the image encoding apparatus 100 may encode an image, using a process optimized for each block of the image.

FIG. 2 illustrates a block diagram of a structure of the second encoder 150 of FIG. 1.

Referring to FIG. 2, the second encoder 150 may include the residual data classifying unit 210, a representative value determining unit 220, a group identification information determining unit 230, and an encoding unit 240.

The residual data classifying unit 210 may classify residual data into a plurality of groups. The residual data may be a difference between an original image of a next frame and a predicted image generated by predicting the original image of the next frame using the image prediction unit 110. Specifically, the residual data classifying unit 210 may store residual data received from the image prediction unit 110, for each macroblock, and may classify the stored residual data into a plurality of groups, using a clustering process, such as a K-means, or using an image dividing process, such as a mean-shift. The present disclosure is not limited to the above examples of classifying the stored residual data.

In this instance, since residual data of a depth image in an image includes zeros and a few residual values, the residual data classifying unit 210 may classify the residual data into two groups.

The representative value determining unit 220 may determine a representative value for each of the groups into which the residual data is classified by the residual data classifying unit 210. For example, the representative value determining unit 220 may determine a mean value of information included in the groups to be a representative value of each of the groups of residual data. Additionally, when information having a plurality of values is included in a single group, a representative value may be determined based on a number of information having the same values among the information.

In other words, the representative value determining unit 220 may determine a representative value that is representative of values of information in the groups obtained by the residual data classifying unit 210.

The group identification information determining unit 230 may determine group identification information used to identify the groups obtained by the residual data classifying unit 210.

In this instance, the group identification information may be information that represents values of elements included in the residual data, in the form of a map to identify a group corresponding to each of the elements, however, the present disclosure is not limited thereto. For example, the group identification information determining unit 230 may determine group identification information in the form of a binary map corresponding to the residual data. In this instance, '0' may be a value indicating a first group among the groups obtained by the residual data classifying unit 210, and '1' may be a value indicating a second group among the groups. Additionally, '0' and '1' may be a representative value of the first group, and a representative value of the second group, respectively.

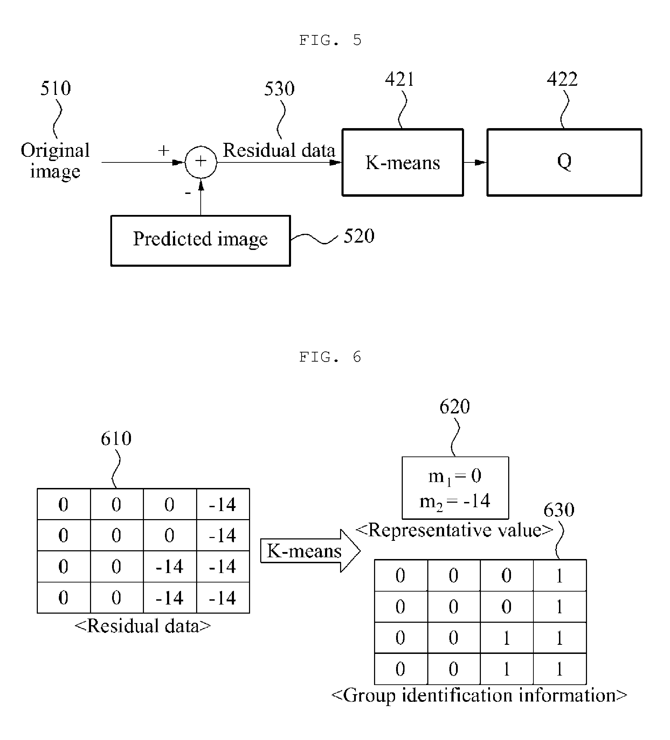

A relationship between residual data, a representative value determined by the representative value determining unit 220, and group identification information determined by the group identification information determining unit 230 will be further described with reference to FIG. 6.

Additionally, the group identification information determining unit 230 may generate an index associated with a format of the group identification information, and may transfer the generated index to the encoding unit 240. The group identification information determining unit 230 may set, in advance, the format of the group identification information, and may generate an index associated with the set format of the group identification information.

The encoding unit 240 may encode the representative value determined by the representative value determining unit 220, and may also encode the group identification information determined by the group identification information determining unit 230. In this instance, for example, the encoding unit 240 may encode the representative value and the group identification information, using context-adaptive binary arithmetic coding (CABAC), however, the present disclosure is not limited thereto. Additionally, when the representative value is an integer with a sign, the encoding unit 240 may encode the representative value using a process of encoding a motion vector.

To maintain loss encoding, the encoding unit 240 may encode representative values of the groups using quantization, instead of using entropy encoding. For example, the encoding unit 240 may quantize representative values using the following Equation 1:

[Equation 1]

$$Z_i = round\left(\frac{m_i}{Q_{step} \times \varepsilon}\right) \quad i = \{1,\ 2\}$$

In Equation 1, $Z_i$ denotes a quantized representative value, and $m_i$ denotes each group. For example, $m_1$ may denote the first group among the groups obtained by the residual data classifying unit 210, and $m_2$ may denote the second group among the groups. Additionally, $Q_{step}$ denotes a value used in H.264/AVC as shown in Table 1, and $\varepsilon$ denotes a constant used to adjust $Q_{step}$.

[Table 1]

| QP | 0 | 1 | 2 | 3 | 4 | 5 | 6 | 7 | 8 | 9 | 10 | 11 | 12 |
|---|---|---|---|---|---|---|---|---|---|---|---|---|---|
| Q_step | 0.625 | 0.6875 | 0.8125 | 0.875 | 1 | 1.125 | 1.25 | 1.375 | 1.625 | 1.75 | 2 | 2.25 | 2.5 |
| QP | 13 | 14 | 15 | 16 | 17 | 18 | 19 | 20 | 21 | 22 | 23 | 24 | 25 |
| Q_step | 2.75 | 3.25 | 3.5 | 4 | 4.5 | 5 | 5.5 | 6.5 | 7 | 8 | 9 | 10 | 11 |
| QP | 26 | 27 | 28 | 29 | 30 | 31 | 32 | 33 | 34 | 35 | 36 | 37 | 38 |
| Q_step | 13 | 14 | 16 | 18 | 20 | 22 | 26 | 28 | 32 | 36 | 40 | 44 | 52 |
| QP | 39 | 40 | 41 | 42 | 43 | 44 | 45 | 46 | 47 | 48 | 49 | 50 | 51 |
| Q_step | 56 | 64 | 72 | 80 | 88 | 104 | 112 | 128 | 144 | 160 | 176 | 208 | 224 |

In Table 1, QP may denote a quantization parameter. Additionally, the encoding unit 240 may perform lossless encoding by setting a denominator of Equation 1 to '1'.

When the index is received from the group identification information determining unit 230, the encoding unit 240 may encode the group identification information using the received index.

FIG. 3 illustrates a block diagram of a structure of the encoding cost determining unit 120 of FIG. 1.

Referring to FIG. 3, the encoding cost determining unit 120 may include a first encoding cost determining unit 310, and a second encoding cost determining unit 320.

The first encoding cost determining unit 310 may determine a cost of the first encoding process, using bitrate-distortion optimization. In the first encoding process, an operation of the DCT may be performed.

For example, the first encoding cost determining unit 310 may determine a cost $J_{mode}$ of the first encoding process using the following Equation 2:

[Equation 2]

$$J_{\text{mode}} = D(s, r, M) + \lambda \cdot R(s, r, M, C)$$

In Equation 2, *D* denotes a distortion factor between a restored image and an original image, and R denotes an amount of bits of an original image encoded by the first encoding process. In this instance, the restored image may be an image restored using a first restored image obtained by decoding residual data encoded using the first encoding process.

Additionally, s denotes information on an original image, r denotes the first restored image, and M denotes header information including mode type information used by the image prediction unit 110 to generate a predicted image. Furthermore, *C* denotes a DCT-quantization coefficient. In this instance, the mode type information in the header information *M* may indicate a best mode.

The second encoding cost determining unit 320 may determine a cost of the second encoding process, using bitrate-distortion optimization. In the second encoding process, an operation of the DCT may be skipped.

For example, the second encoding cost determining unit 320 may determine a cost $J_{\text{NoDCT\_mode}}$ of the second encoding process, using the following Equation 3:

[Equation 3]

$$J_{\text{NoDCT\_mode}} = D(s, \tilde{r}, M) + \lambda \cdot R(s, \tilde{r}, M, m_1, m_2, P)$$

In Equation 3, D denotes a distortion factor between a restored image and an original image, and R denotes an amount of bits of an original image encoded by the second encoding process. In this instance, the restored image may be an image restored using a second restored image obtained by decoding residual data encoded by the second encoding process.

Additionally, $\tilde{r}$ denotes the second restored image, and $m_1$ and $m_2$, respectively, denote a representative value of the first group and a representative value of the second group. Furthermore, P denotes group identification information used to identify an arrangement of the first group and the second group of the residual data.

When a result value of Equation 2 is less than a result value of Equation 3, the encoding process selecting unit 130 may select the first encoding process. When the result value of Equation 3 is less than the result value of Equation 2, the encoding process selecting unit 130 may select the second encoding process.

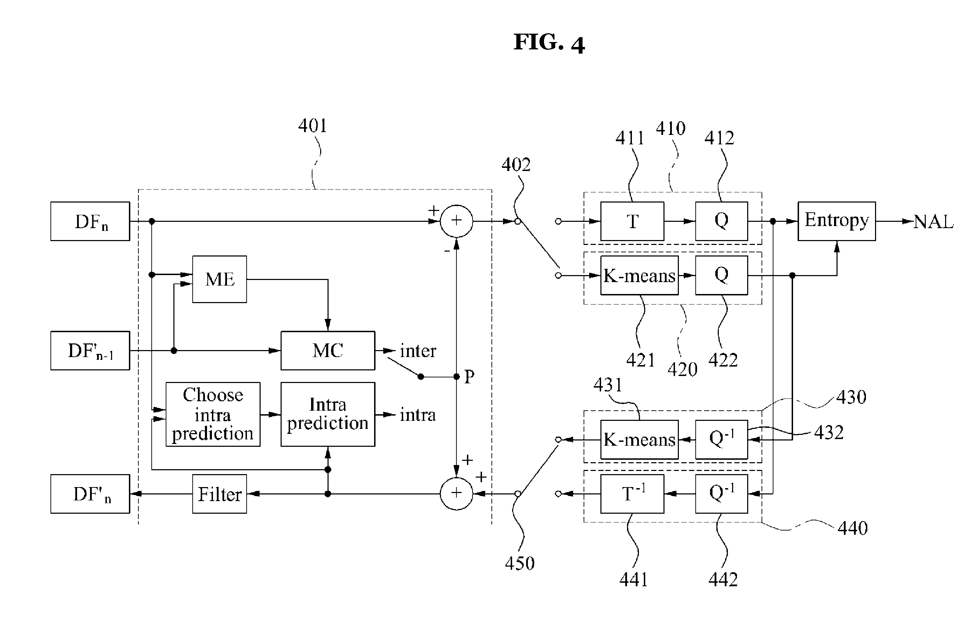

FIG. 4 illustrates a diagram of an example of an image encoding apparatus, according to example embodiments.

In FIG. 4, an image prediction unit 401 of the image encoding apparatus may predict a value of a next frame of an image, and may determine residual data. Specifically, the image prediction unit 401 may determine residual data, namely, a difference between a next frame P of a predicted image and an original image $DF_n$ of a corresponding frame, using an optimum mode selected from among various blocks of an intra prediction mode or an inter prediction mode.

An encoding process selecting unit 402 of the image encoding apparatus may compare a first encoding cost and a second encoding cost that are determined by an encoding cost determining unit, may select either the first encoding process or the second encoding process, and may control a switch in a manner that depends upon the comparison.

For example, when the first encoding cost is less than the second encoding cost, the encoding process selecting unit 402 may connect the switch to a first encoder 410, and may transfer the residual data to the first encoder 410. When the second encoding cost is less than the first encoding cost, the encoding process selecting unit 402 may connect the switch to the second encoder 420, and may transfer the residual data to the second encoder 420.

In this instance, for example, a transformation unit T 411 of the first encoder 410 may perform DCT on the residual data, so that the residual data may be transformed to frequency domain information. Additionally, a quantization unit Q 412 of the first encoder 410 may encode the transformed frequency domain information.

Additionally, a K-means 421 of the second encoder 420 may classify the residual data into a plurality of groups. In addition, the second encoder 420 may determine a representative value of each of the groups, and may determine group identification information used to identify the groups. Subsequently, a quantization unit Q 422 of the second encoder 420 may encode the representative value and the group identification information. In this instance, the K-means 421 may be hardware including the residual data classifying unit 210, the representative value determining unit 220, and the group identification information determining unit 230 of FIG. 2. The quantization unit Q 422 may be hardware corresponding to the encoding unit 240 of FIG. 2. Additionally, the quantization unit Q 422 may quantize representative values, and may encode the quantized representative values.

The image encoding apparatus may decode encoded information in order to perform prediction of the image prediction unit 401, and to perform bitrate-distortion optimization, which is required to determine the first encoding cost and the second encoding cost.

A second decoder 430 may determine residual data encoded by the second encoder 420, and may transfer the determined residual data to the image prediction unit 401 and the encoding cost determining unit. Specifically, a quantization unit $Q^{-1}$ 432 of the second decoder 430 may decode the encoded representative value and the encoded group identification information, and may restore the representative value and the group identification information. A K-means 431 of the second decoder 430 may determine the residual data input to the second encoder 420, using the restored group identification information and the restored representative value. In this instance, the restored residual data may correspond to a second restored image.

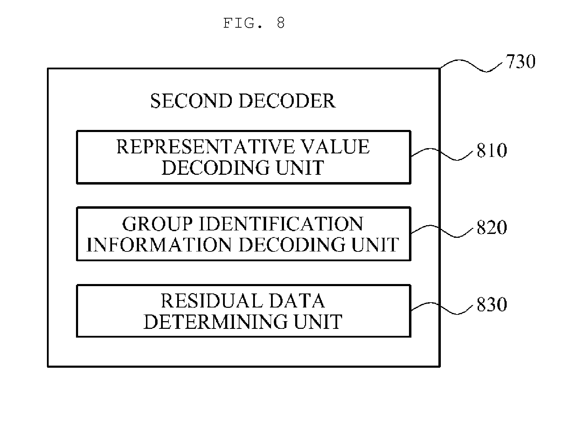

The second decoder 430 has the same configuration as a second decoder included in an image decoding apparatus, and accordingly a decoding operation corresponding to a second decoding process will be further described later with reference to FIG. 8.

A first decoder 440 may determine residual data encoded by the first encoder 410, and may transfer the determined residual data to the image prediction unit 401 and the encoding cost determining unit. Specifically, a quantization unit $Q^{-1}$ 442 of the first decoder 440 may decode the encoded residual data to frequency domain information, and a transformation unit $T^{-1}$ 441 of the first decoder 440 may perform inverse-DCT (IDCT) on the decoded residual data, and may determine the residual data input to the first encoder 410. In this instance, the restored residual data may correspond to a first restored image.

A switch 450 may be connected to a corresponding decoder based on an operation of the encoding process selecting unit 402, may receive restored residual data, and may transfer the received residual data to the image prediction unit 401 and the encoding cost determining unit.

In this instance, the image prediction unit 401 may combine the next frame P and the residual data, and may restore a next frame of the image. Additionally, the encoding cost determining unit may determine the first encoding cost and the second encoding cost, using a distortion factor between the restored next frame and a next frame of an actual image.

FIG. 5 illustrates a diagram of an operation of the second encoder 420 of FIG. 4.

The K-means 421 of the second encoder 420 may receive residual data 530, namely, a difference between an original image 510 of a corresponding frame and a predicted image 520 predicted using the image prediction unit 401, based on an original image of a previous frame.

In this instance, for example, the K-means 421 may classify the received residual data into two groups, using a K-means clustering process, and may determine a representative value of each of the two groups, and may determine group identification information used to identify the two groups.

Subsequently, the quantization unit Q 422 may encode the representative value and the group identification information, without performing DCT operation. In this instance, the quantization unit Q 422 may quantize representative values, and may encode the quantized representative values.

FIG. 6 illustrates a diagram of an example of generating a representative value and group identification information, according to example embodiments.

When residual data 610 includes ten elements '0' and six elements '-14' as shown in FIG. 6, the residual data classifying unit 210 may classify the elements '0' and '-14' into two groups, namely a first group and a second group, respectively, using the K-means clustering process.

Subsequently, the representative value determining unit 220 may determine representative values 620 of the two groups. Since the first group and the second group have values of '0' and '-14', respectively, the representative value determining unit 220 may determine '0', namely a common value of information included in the first group, to be a representative value $m_1$ of the first group, and may determine '-14', namely a common value of information included in the second group, to be a representative value $m_2$ of the second group. For example, when values of elements classified into groups differ from each other, the representative value determining unit 220 may determine, as a representative value of each of the groups, a mean value or a value based on a standard deviation.

Subsequently, the group identification information determining unit 230 may generate group identification information 630 used to indicate which one of the first group and the second group includes elements of the residual data 610. In this instance, a smallest number of group identification information 630 may be generated, because the group identification information merely needs to indicate which one of the first group and the second group includes elements of the residual data 610. For example, since the two groups may be identified using only '0' and '1', the group identification information 630 may be generated in the form of a binary map as shown in FIG. 6.

To determine residual data, a representative value of the first group and a representative value of the second group may be inputted to an element corresponding to the first group and an element corresponding to the second group, respectively, among elements in the group identification information 630. For example, when the second group has a representative value of '-14', and when an element corresponding to the second group in the group identification information 630 has a value of '1', the representative value of '-14' may be inputted to an element indicated by '1' in the group identification information 630, so that the residual data 610 may be restored. In this instance, the first group has a representative value of '0', and an element corresponding to the first group in the group identification information 630 has a value of '0', and thus, a separate correction may not be required.

When the residual data 610 is encoded without a change, a number of bits of encoding information may be increased, since a number of the elements '-14' is six. Conversely, the second encoding process, according to example embodiments, may reduce the number of bits of the encoding information, since a number of '1' that may be expressed by 1 bit is six, and only a single representative value of '-14' is included, as shown in FIG. 6.

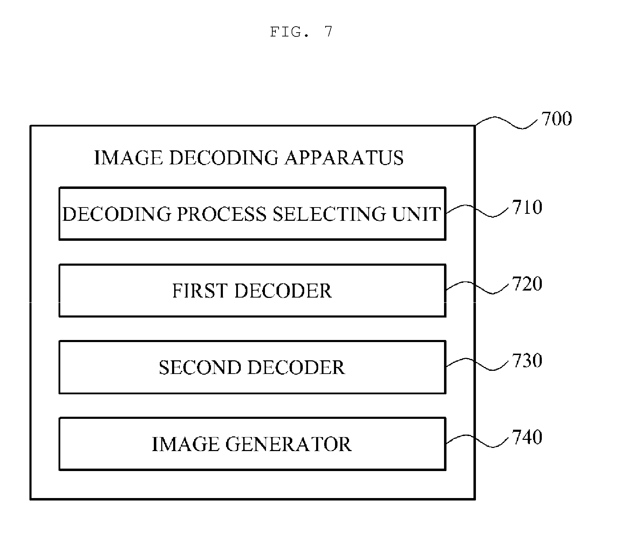

FIG. 7 illustrates a block diagram of an image decoding apparatus 700, according to example embodiments.

Referring to FIG. 7, the image decoding apparatus 700 may include a decoding process selecting unit 710, a first decoder 720, a second decoder 730, and an image generator 740.

The decoding process selecting unit 710 may select a process of decoding the encoding information received from the image encoding apparatus 100 of FIG. 1, based on the encoding identification information received from the encoding process selecting unit 130 of FIG. 1.

For example, when encoding identification information corresponding to the first encoding process is received, the decoding process selecting unit 710 may transmit, to the first decoder 720, the encoding information received from the image encoding apparatus 100. When encoding identification information corresponding to the second encoding process is received, the decoding process selecting unit 710 may transmit, to the second decoder 730, the encoding information received from the image encoding apparatus 100.

The first decoder 720 may determine residual data in the received encoding information, using a first decoding process corresponding to the first encoding process. Specifically, the first decoder 720 may decode the encoding information to frequency domain information, may perform IDCT on the decoded information, and may determine the residual data that was inputted to the first encoder 140 of FIG. 1.

The second decoder 730 may determine residual data in the received encoding information, using a second decoding process corresponding to the second encoding process. Specifically, the second decoder 730 may decode the encoding information, may restore a representative value of each group and group identification information, and may determine residual data input to the second encoder 150 of FIG. 1, using the restored group identification information and the restored representative value.

In this instance, a configuration of the second decoder 730 will be further described with reference to FIG. 8.

The image generator 740 may generate a predicted image by predicting a value of a next frame of a restored image, and may combine the predicted image with residual data restored by the first decoder 720 or the second decoder 730, thereby restoring the original image.

In this instance, for example, the image generator 740 may have the same configuration as the image prediction unit 110 of FIG. 1, that is, may generate a predicted image by predicting a value of a next frame of an image. The image generator 740 may select an optimum mode from among various blocks of an intra prediction mode or an inter prediction mode, and may generate a predicted image using the optimum mode.

The residual data may be a difference between a next frame of an image predicted by the image generator 740, which has the same configuration as the image prediction unit 110 depending on embodiments, and a next frame of an actual image. In other words, a difference between the predicted image generated by the image generator 740 and a next frame of an actual image may be included in the residual data. Accordingly, when the residual data is combined with the predicted image, the next frame of the actual image may be restored.

For example, when the decoding process selecting unit 710 receives encoding identification information corresponding to the second encoding process, and encodes residual data into two groups using the second encoding process, and when an element corresponding to a first group in group identification information has a value of '1', the image generator 740 may restore the original image using the following Equation 4:

[Equation 4]

$$\tilde{I}_i = E_i + \left\{ P_i \tilde{Z}_1 + (1 - P_i) \tilde{Z}_2 \right\} \qquad i = \{0, 1, \ldots, 15\}$$

In Equation 4, $\tilde{Z}_1$ denotes a decoded representative value of a first group, and $\tilde{Z}_2$ denotes a decoded representative value of a second group. Additionally, $E_i$ denotes a predicted image generated by the image prediction unit 110 (or the image generator 740, which has the same configuration depending on embodiments), and $P_i$ denotes a value of each element included in the group identification information.

FIG. 8 illustrates a block diagram of the configuration of the second decoder 730 of FIG. 7.

Referring to FIG. 8, the second decoder 730 may include a representative value decoding unit 810, a group identification information decoding unit 820, and a residual data determining unit 830.

The representative value decoding unit 810 may decode information obtained by encoding a representative value of each group, among the encoding information received from the image encoding apparatus 100, and may restore the representative value.

In this instance, the representative value decoding unit 810 may decode, using entropy decoding, for example, the information obtained by the encoding of the representative value, may perform inverse-quantization, and may decode the representative value. For example, the representative value decoding unit 810 may inverse-quantize a decoded representative value, using the following Equation 5:

[Equation 5]

$$\tilde{Z}_i = Z_i \times Q_{step} \times \varepsilon$$

In Equation 5, $\tilde{Z}_i$ denotes a restored representative value of each of the groups, and $Z_i$ denotes a decoded representative value of each of the groups. In this instance, $Z_i$ may be identical to a representative value quantized by the encoding unit 240 of the image encoding apparatus 100. Additionally, $Q_{step}$ denotes a value used in H.264/AVC as shown in Table 1, and $\varepsilon$ denotes a constant used to adjust $Q_{step}$.

The group identification information decoding unit 820 may decode information obtained by encoding group identification information, among the encoding information received from the image encoding apparatus 100, and may decode the group identification information. In this instance, the group identification information decoding unit 820 may decode, using entropy decoding, for example, the encoded group identification information.

The residual data determining unit 830 may determine residual data, using the representative value decoded by the representative value decoding unit 810 and the group identification information decoded by the group identification information decoding unit 820. Specifically, the residual data determining unit 830 may input a representative value of a first group, and a representative value of a second group to an element corresponding to the first group and an element corresponding to the second group, among elements of the group identification information, respectively, and may determine the residual data.

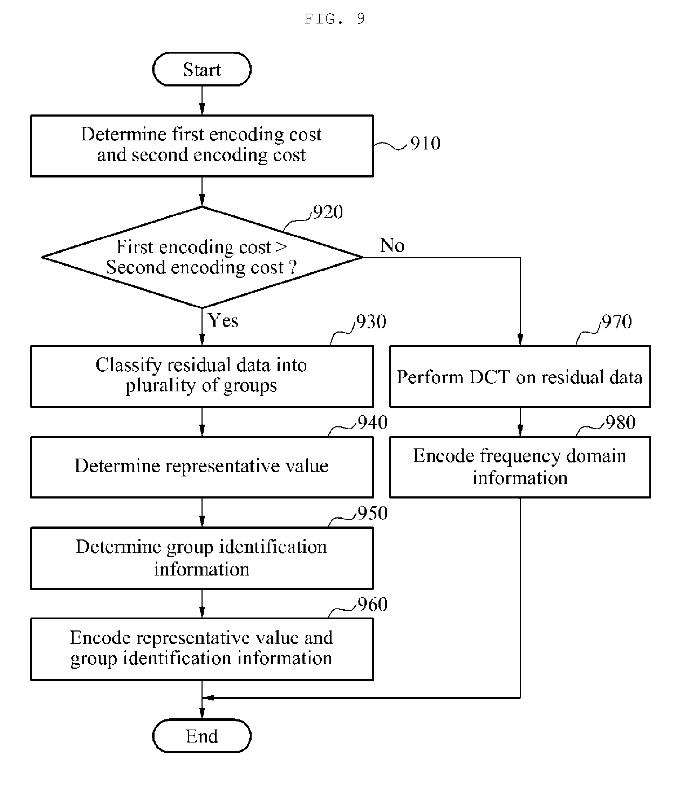

FIG. 9 illustrates a flowchart of an image encoding method, according to example embodiments.

In operation 910, the encoding cost determining unit 120 may determine a first encoding cost and a second encoding cost, using a bitrate-distortion optimization process. The first encoding cost may occur when an original image is encoded by a first encoding process. The second encoding cost may occur when the original image is encoded by a second encoding process.

In operation 920, the encoding process selecting unit 130 may determine whether the first encoding cost is greater than the second encoding cost. When the first encoding cost is greater than the second encoding cost, the encoding process selecting unit 130 may transmit residual data to the second encoder 150, and the second encoder 150 may perform operations 930 through 960 that correspond to the second encoding process. Additionally, when the first encoding cost is less than the second encoding cost, i.e., the result of operation 920 is "No", the encoding process selecting unit 130 may transmit the residual data to the first encoder 140, and the first encoder 140 may perform operations 970 and 980 that correspond to the first encoding process.

In this instance, the encoding process selecting unit 130 may generate encoding identification information indicating an encoding process selected from among the first encoding process and the second encoding process, and may transmit the encoding identification information to an image decoding apparatus for each macroblock, before the first encoder 140 or the second encoder 150 encodes the residual data.

In operation 930, the second encoder 150 may classify the residual data into a plurality of groups.

In operation 940, the second encoder 150 may determine a representative value of each of the groups. The representative value may be representative of values of the residual data included in the groups. For example, the second encoder 150 may determine, as a representative value, a mean value of the residual data included in the groups, however, the present disclosure is not limited thereto.

In operation 950, the second encoder 150 may determine group identification information used to identify the groups. In this instance, for example, the group identification information may be information obtained by changing values of elements included in the residual data to a binary numeral or an integer to identify a group corresponding to each of the groups.

As a further example, each of the first group and the second group may correspond to group identification information with the value '0' and '1', respectively.

In operation 960, the second encoder 150 may encode the representative value determined in operation 940 and the group identification information determined in operation 950. Accordingly, the second encoder 150 may encode the residual data using a smaller number of bits, compared to the first encoding process.

In operation 970, the first encoder 140 may perform DCT on the residual data, and may transform the residual data to frequency domain information. Specifically, the first encoder 140 may perform the DCT on residual data with high repetitiveness in space, and may represent the residual data using a plurality of coefficients of a frequency domain.

In operation 980, the first encoder 140 may encode the frequency domain information obtained in operation 970. Specifically, the first encoder 140 may encode, using quantization and entropy encoding, residual data transformed to coefficients by the DCT.

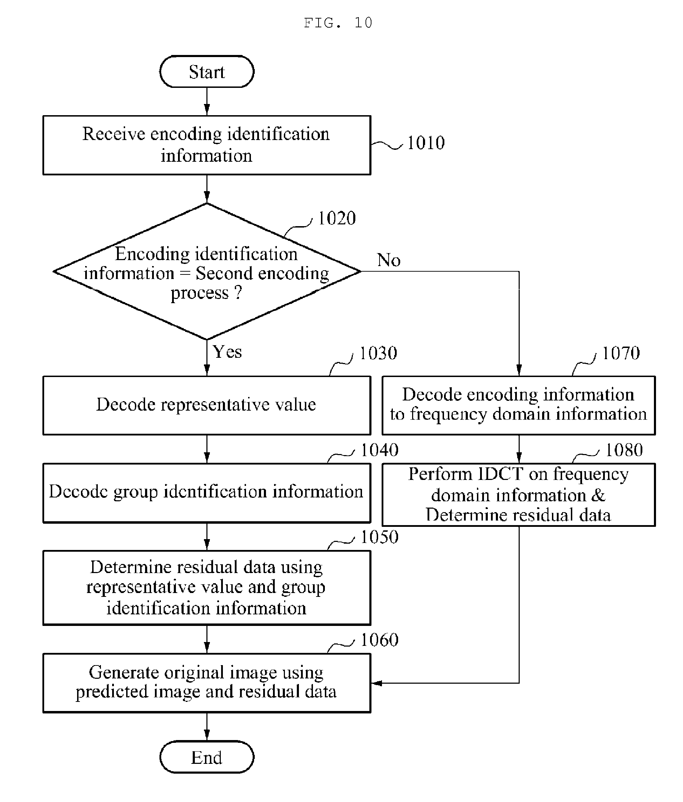

FIG. 10 illustrates a flowchart of an image decoding method, according to example embodiments.

In operation 1010, the decoding process selecting unit 710 may receive encoding identification information from the encoding process selecting unit 130 of the image encoding apparatus 100.

In this instance, for example, the encoding identification information may be used to identify which one of a first encoding process and a second encoding process may be used to encode encoding information that is received by the image decoding apparatus 700 from the image encoding apparatus 100. In the first encoding process, DCT may be performed, and in the second encoding process, the DCT may be skipped.

In operation 1020, the decoding process selecting unit 710 may determine whether the encoding identification information received in operation 1010 corresponds to the second encoding process.

When the received encoding identification information corresponds to the second encoding process, the decoding process selecting unit 710 may transmit the encoding information received from the image encoding apparatus 100 to the second decoder 730, and the second decoder 730 may perform operations 1030 through 1050, which correspond to the second encoding process. Additionally, when the received encoding identification information does not correspond to the second encoding process, the decoding process selecting unit 710 may transmit the encoding information received from the image encoding apparatus 100 to the first decoder 720, and the first decoder 720 may perform operations 1070 and 1080, which correspond to the first encoding process.

In operation 1030, the second decoder 730 may decode a representative value, from the encoding information received from the image encoding apparatus 100.

In this instance, the representative value decoding unit 810 may decode, using entropy decoding, the information obtained by the encoding a representative value, may perform inverse-quantization, and may decode a representative value of each of the groups.

In operation 1040, the second decoder 730 may decode group identification information, from the encoding information received from the image encoding apparatus 100. The group identification information decoding unit 820 may decode, using entropy decoding, group identification information.

In operation 1050, the second decoder 730 may determine residual data, using the representative value decoded in operation 1030, and using the group identification information decoded in operation 1040. The second decoder 730 may input a representative value of a first group, and a representative value of a second group to an element corresponding to the first group and an element corresponding to the second group among elements of the group identification information, respectively, and may determine the residual data.

In operation 1060, the image generator 740 may generate a predicted image by predicting a value of a next frame of an original image, may combine the predicted image with residual data determined in operation 1050 or operation 1080, and may generate an original image of a next frame. In operation 1070, the first decoder 720 may decode the encoding information received from the image encoding apparatus 100 to frequency domain information.

In operation 1080, the first decoder 720 may perform IDCT on the frequency domain information obtained in operation 1070, and may determine the residual data input to the first encoder 140. In this instance, the first decoder 720 may transfer the determined residual data to the image generator 740, and perform operation 1060.

As described above, according to example embodiments, residual data may be classified into groups, and may be encoded using a representative value of each of the groups and group identification information used to identify the groups, and thus it is possible to reduce a size of a bit to be encoded.

Additionally, according to example embodiments, a block that needs to perform discrete cosine transform (DCT) on residual data may be identified from an image, and an original image may be encoded using either a first encoding process, in which the DCT is performed, or a second encoding process, in which the DCT is skipped, based on a result of the identifying. Thus, it is possible to perform encoding using a process optimized for each block of the image.

The methods according to the above-described example embodiments may be recorded in non-transitory computer-readable media including program instructions to implement various operations and methods embodied by a computer. The media may also include, alone or in combination with the program instructions, data files, data structures, and the like. The program instructions recorded on the media may be those specially designed and constructed for the purposes of the example embodiments, or they may be of the kind well-known and available to those having skill in the computer software arts. Examples of non-transitory computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described example embodiments, or vice versa.

Further, according to an aspect of the embodiments, any combinations of the described features, functions and/or operations can be provided.

Moreover, each of the image encoding apparatus and image decoding apparatus may include at least one processor to execute at least one of the above-described units and methods.

Although example embodiments have been shown and described, it would be appreciated by those skilled in the art that changes may be made in these example embodiments without departing from the disclosure, the scope of which is defined in the claims and their equivalents.

**Claims**

1. An image encoding apparatus, comprising:

   a residual data classifying unit to classify residual data into a plurality of groups, the residual data being a difference between an original image and a predicted image;
   a representative value determining unit to determine a representative value of each of the plurality of groups, the representative value representing values of the residual data that are included in the plurality of groups;
   a group identification information determining unit to determine group identification information, the group identification information being used to identify each of the plurality of groups; and
   an encoding unit to encode the representative value and the group identification information.

2. An image encoding apparatus according to claim 1, comprising:

   a first encoding cost determining unit to determine a cost of a first encoding process;
   a second encoding cost determining unit to determine a cost of a second encoding process;
   an encoding process selecting unit to compare the cost of the first encoding process with the cost of the second encoding process, and to select one of the first encoding process and the second encoding process, based on the comparing.

3. The image encoding apparatus of claim 1 or 2,
   wherein in the first encoding process a discrete cosine transform (DCT) is performed, and in the second encoding process the DCT is skipped.

4. The image encoding apparatus of claim 2 or 3,
   wherein when the first encoding process is selected, a first encoder to encode an original image using the first encoding process; and when the second encoding process is selected, a second encoder to encode an original image using the second encoding process.

5. The image encoding apparatus of claim 2, 3 or 4,
   wherein the first encoding cost determining unit determines the cost of the first encoding process, using a distortion factor between the original image and a first restored image, and using an amount of bits of an original image encoded by the first encoding process, the first restored image being obtained by decoding the original image encoded by the first encoding process.

6. An image encoding method, comprising:

   classifying residual data into a plurality of groups, the residual data being a difference between an original image and a predicted image;
   determining a representative value of each of the plurality of groups, the representative value representing values of the residual data that are included in the plurality of groups;
   determining group identification information, the group identification information being used to identify each of the plurality of groups; and
   encoding the representative value, and the group identification information.

7. The image encoding method of claim 6, wherein the classifying comprises classifying the residual data into the plurality of groups, using at least one of a clustering process and an image dividing process.

8. The image encoding method of claim 6 or 7, wherein the group identification information includes information that relates to values of elements included in the residual data in the form of a map, the map being used to identify a group of the elements.

9. The image encoding method of claim 6, 7 or 8,
wherein the determining of the group identification information comprises generating an index associated with a format of the group identification information, and
wherein the encoding comprises encoding the group identification information using the generated index.

10. The image encoding method of any of claims 6-9,
wherein the encoding comprises:

   quantizing the representative value, and encoding the quantized representative value and the group identification information.

11. The image encoding apparatus according to any of claims 1-5, wherein the method according to any of claims 6-9 is used.

12. The image encoding apparatus of any of claims 1-5, 11, wherein the second encoding cost determining unit calculates the amount of the bits of the original image encoded by the second encoding process, using information on the original image, information on the second restored image, information on a header of a mode used to generate a predicted image, information on the representative value, and the group identification information.

13. The image encoding apparatus of any of claims 1-5, 11, 12, wherein the encoding process selecting unit transmits, to an image decoding apparatus, encoding identification information indicating an encoding process selected between the first encoding process and the second encoding process.

14. An image decoding apparatus, comprising:

   a representative value decoding unit to decode a representative value of each of a plurality of groups, into which residual data is classified, from information encoded by skipping a discrete cosine transform (DCT);
   a group identification information decoding unit to decode group identification information from the information, the group identification information being used to identify the plurality of groups;
   a residual data determining unit to determine residual data, using the decoded representative value and the decoded group identification information, the residual data being a difference between an original image and a predicted image; and
   an image generator to generate an original image, using the predicted image and the determined residual data,
   wherein preferably the group identification information includes information that represents values of elements included in the residual data in the form of a map, the map being used to identify a group of the elements,
   wherein preferably the representative value decoding unit decodes, using entropy decoding, information obtained by encoding the representative value among the information, inverse-quantizes the decoded information, and decodes the representative value, and
   wherein preferably the group identification information decoding unit decodes, using entropy decoding, information obtained by encoding the group identification information among the information.

15. An image decoding method, comprising:

   decoding a representative value of each of a plurality of groups, into which residual data is classified, from information encoded by skipping a discrete cosine transform (DCT);
   decoding group identification information from the information, the group identification information being used to identify each of the plurality of groups;
   determining the residual data, using the decoded representative value and the decoded group identification information, the residual data being a difference between an original image and a predicted image; and
   generating an original image, using the predicted image and the determined residual data.

FIG. 1

IMAGE ENCODING APPARATUS — 100

IMAGE PREDICTION UNIT — 110

ENCODING COST DETERMINING UNIT — 120

ENCODING PROCESS SELECTING UNIT — 130

FIRST ENCODER — 140

SECOND ENCODER — 150

FIG. 2

150

SECOND ENCODER

| RESIDUAL DATA CLASSIFYING UNIT | 210 |

| REPRESENTATIVE VALUE DETERMINING UNIT | 220 |

| GROUP IDENTIFICATION INFORMATION DETERMINING UNIT | 230 |

| ENCODING UNIT | 240 |

FIG. 3

120

ENCODING COST DETERMINING UNIT

| FIRST ENCODING COST DETERMINING UNIT | 310 |

| SECOND ENCODING COST DETERMINING UNIT | 320 |

## FIG. 4

EP 2 611 156 A1

FIG. 5

510         530        421        422

Original image   +   $\oplus$   Residual data   | K-means | → | Q |

-   Predicted image    520

FIG. 6

610

| 0 | 0 | 0 | -14 |
|---|---|---|-----|
| 0 | 0 | 0 | -14 |
| 0 | 0 | -14 | -14 |
| 0 | 0 | -14 | -14 |

<Residual data>

K-means

620

$$m_1 = 0$$
$$m_2 = -14$$

<Representative value>

630

| 0 | 0 | 0 | 1 |
|---|---|---|---|
| 0 | 0 | 0 | 1 |
| 0 | 0 | 1 | 1 |
| 0 | 0 | 1 | 1 |

<Group identification information>

FIG. 7

IMAGE DECODING APPARATUS — 700

DECODING PROCESS SELECTING UNIT — 710

FIRST DECODER — 720

SECOND DECODER — 730

IMAGE GENERATOR — 740

FIG. 8

730

SECOND DECODER

REPRESENTATIVE VALUE
DECODING UNIT — 810

GROUP IDENTIFICATION
INFORMATION DECODING UNIT — 820

RESIDUAL DATA
DETERMINING UNIT — 830

FIG. 9

```
                      ┌──────────────┐
                      │    Start     │
                      └──────┬───────┘
                             │
            ┌────────────────▼────────────────┐
            │  Determine first encoding cost   │ ～910
            │    and second encoding cost      │
            └────────────────┬────────────────┘
                             │
                          ╱──▼──╲  ～920
                      ╱─────────────╲
                   ╱ First encoding cost > ╲      No
                  ◁  Second encoding cost ?  ▷─────────────┐
                   ╲                       ╱               │
                      ╲─────────────╱                      │
                          ╲─┬─╲                            │
                          Yes │   ～930                     │  ～970
            ┌────────────────▼────────────────┐  ┌──────────▼──────────────┐
            │    Classify residual data into   │  │ Perform DCT on residual │
            │       plurality of groups        │  │          data           │
            └────────────────┬────────────────┘  └──────────┬──────────────┘
                             │   ～940                        │   ～980
            ┌────────────────▼────────────────┐  ┌──────────▼──────────────┐
            │   Determine representative value │  │  Encode frequency domain │
            │                                  │  │       information        │
            └────────────────┬────────────────┘  └──────────┬──────────────┘
                             │   ～950                        │
            ┌────────────────▼────────────────┐              │
            │   Determine group identification │              │
            │            information           │              │
            └────────────────┬────────────────┘              │
                             │   ～960                         │
            ┌────────────────▼────────────────┐              │
            │ Encode representative value and  │              │
            │  group identification information │              │
            └────────────────┬────────────────┘              │
                             │◄──────────────────────────────┘
                      ┌──────▼───────┐
                      │     End      │
                      └──────────────┘
```

FIG. 10

```
                    ┌─────────┐
                    │  Start  │
                    └─────────┘
                         │
                         ▼
        ┌────────────────────────────────┐
        │  Receive encoding identification│  ⌐ 1010
        │           information           │
        └────────────────────────────────┘
                         │
                         ▼
                        ╱ ╲  ⌐ 1020
                      ╱     ╲
                    ╱  Encoding ╲
         ╱ Yes    ╱ identification ╲    No
        │   ◄────╱ information = Second╲────►
        │        ╲  encoding process? ╱
        │          ╲               ╱
        ▼            ╲           ╱
```

| Yes | No |
|---|---|
| **1030** Decode representative value | **1070** Decode encoding information to frequency domain information |
| **1040** Decode group identification information | **1080** Perform IDCT on frequency domain information & Determine residual data |
| **1050** Determine residual data using representative value and group identification information | |

1060 Generate original image using predicted image and residual data

```
                    ┌─────────┐
                    │   End   │
                    └─────────┘
```

# EP 2 611 156 A1

Europäisches
Patentamt
European
Patent Office
Office européen
des brevets

## EUROPEAN SEARCH REPORT

Application Number

EP 12 19 6944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHEN G ET AL: "Edge-adaptive transforms for efficient depth map coding", 2010 PICTURE CODING SYMPOSIUM (PCS 2010) : NAGOYA, JAPAN, 8 - 10 DECEMBER 2010, IEEE, PISCATAWAY, NJ, 8 December 2010 (2010-12-08), pages 566-569, XP031885235, DOI: 10.1109/PCS.2010.5702565 ISBN: 978-1-4244-7134-8 | 1-8, 10-15 | INV. H04N7/26 ADD. H04N7/32 |
| Y | * abstract; figures 1, 2 * * sections 2-5 * | 9 | |
| Y | JAEJOON LEE ET AL: "Description of AVC compatible 3D video coding technology by Samsung", 98. MPEG MEETING; GENEVA; (MOTION PICTURE EXPERT GROUP OR ISO/IEC JTC1/SC29/WG11), no. m22632, 27 November 2011 (2011-11-27), XP030051195, | 9 | |
| A | * abstract; figures 3-6; table 1 * * section 3.2 * | 1-8, 10-15 | |
| | | | TECHNICAL FIELDS SEARCHED (IPC) |
| X,P | CHEON LEE ET AL: "Residual coding of depth map with transform skipping", VISUAL COMMUNICATIONS AND IMAGE PROCESSING (VCIP 2012), IEEE,, 27 November 2012 (2012-11-27), pages 1-4, XP032309228, DOI: 10.1109/VCIP.2012.6410814 ISBN: 978-1-4673-4405-0 * the whole document * | 1-15 | H04N |
| A | US 2010/231688 A1 (PARK GWANG-HOON [KR] ET AL) 16 September 2010 (2010-09-16) * the whole document * | 1-15 | |

The present search report has been drawn up for all claims

| Place of search | Date of completion of the search | Examiner |
|---|---|---|
| The Hague | 4 April 2013 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 19 6944

This annex lists the patent family members relating to the patent documents cited in  the above-mentioned European search report.
The members are as contained in the European Patent Office EDP file on
The European Patent Office is in no way liable for these particulars which are merely given for the purpose of information.

04-04-2013

| Patent document cited in search report | Publication date | Patent family member(s) | Publication date |
|---|---|---|---|
| US 2010231688 A1 | 16-09-2010 | NONE | |

For more details about this annex : see Official Journal of the European Patent Office, No. 12/82

**EP 2 611 156 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61581705 A
- KR 1020120053223